# EUROPÄISCHE PATENTANMELDUNG

(11) **EP 4 481 190 A1**
(43) Veröffentlichungstag der Anmeldung: **25.12.2024**
(21) Anmeldenummer: 24182535.5
(22) Anmeldetag: 17.06.2024
(51) Int. Cl.: F03D 7/02, F03D 80/00

(54) **WINDENERGIEANLAGENSYSTEM MIT EINER STEUERUNG UND ENERGIEVERSORGUNGSEINHEIT MIT EINEM ENERGIESPEICHER SOWIE WINDENERGIEANLAGE DAMIT UND VERFAHREN DAFÜR**

(30) Priorität: 19.06.2023 DE 102023115943
(71) Anmelder: Wobben Properties GmbH, 26607 Aurich (DE)
(72) Erfinder: Schall, Nils-Hendric, 14199 Berlin (DE); Hohmann, Michael, 26345 Bockhorn (DE); Heller, Stefan, 26632 Ihlow (DE); Busker, Kai, 26629 Großefehn (DE)
(74) Vertreter: Eisenführ Speiser

(57) **Zusammenfassung**

Die Erfindung betrifft ein Windenergieanlagensystem (10) für eine Windenergieanlage (100) mit einer Steuerung (12) zum Steuern der Windenergieanlage (100) und einer Energieversorgungseinheit (30) mit einem Energiespeicher (36) sowie einem Netzanschluss (25) zum Anschluss an ein Netz (24), wobei die Energieversorgungseinheit (30) eingerichtet ist, einen Normalbetriebsmodus der Windenergieanlage (100), in dem die Windenergieanlage (100) mit dem Netz (24) verbunden ist, und einen Trennzustand der Windenergieanlage (100), in dem die Windenergieanlage (100) vom Netz (24) getrennt ist, zu erkennen und wobei die Steuerung (12) mit einem Windsensor (15) zum Erfassen mindestens eines Windparameters (42) verbunden ist und eine Azimutsteuerung (14) zum Einstellen eines Azimutwinkels (56) der Windenergieanlage (100) in Abhängigkeit von dem Windparameter (42) umfasst. Die Energieversorgungseinheit (30) weist ferner eine Überwachungsvorrichtung (38) auf, die im Trennzustand mit Energie aus dem Energiespeicher (36) versorgt wird und mit dem Windsensor (15) oder einem weiteren Windsensor (40) zum Erfassen von Windparametern (42) im Trennzustand verbunden ist und die Energieversorgungseinheit (30) ist eingerichtet, in dem Trennzustand in Abhängigkeit von dem mit der Überwachungsvorrichtung (38) erfassten Windparameter (42) die Steuerung (12) energieversorgungslos zu schalten oder mit Energie aus dem Energiespeicher (36) zu versorgen.

Die Erfindung betrifft ferner eine Windenergieanlage (100) mit einem Windenergieanlagensystem (10) und ein Verfahren zum Betreiben einer Windenergieanlage (100).

## Beschreibung

Die Erfindung betrifft den Bereich der Windenergieanlagen. Windenergieanlagen sind allgemein bekannt und dienen zum Wandeln kinetischer Windenergie in elektrische Energie. Hierzu umfasst die Windenergieanlage einen Rotor mit mehreren Rotorblättern. Durch den Wind wird eine Kraft auf die Rotorblätter der Windenergieanlage ausgeübt, um so den Rotor in eine Rotationsbewegung zu versetzen. Mit dem Rotor ist ein Generator gekoppelt, der durch die Drehbewegung des Rotors angetrieben wird und so elektrische Energie zur Einspeisung in ein Netz, beispielsweise ein Versorgungsnetz, bereitstellt.

Zur Einspeisung ist die Windenergieanlage demnach mit dem Netz verbunden, wobei Komponenten zum Aufrechterhalten eines sicheren Betriebs der Windenergieanlage auch mit Energie aus dem Netz versorgbar sind, wenn durch die Windenergieanlage keine elektrische Energie aus dem Wind gewonnen werden kann. Ein solcher Fall liegt beispielsweise bei sehr geringen Windgeschwindigkeiten vor. Zudem sind auch Situationen bekannt, in denen die Windenergieanlage aufgrund einer, beispielsweise vom Netzbetreiber, vorgegebenen Leistungsreduzierung oder Leistungsdrosselung trotz ausreichender Windgeschwindigkeiten keine elektrische Energie erzeugt. Auch in solchen Fällen werden Komponenten der Windenergieanlage mit Energie aus dem Netz versorgt. Eine kontinuierliche Versorgung der Komponenten ist beispielsweise nötig, um einen Drehwinkel der Rotorblätter um ihre Längsachse oder die Ausrichtung des Rotors, also den Azimutwinkel, mithilfe eines Azimutantriebs kontinuierlich an sich ändernde Windverhältnisse anpassen zu können. So kann eine Belastung durch aus dem Wind resultierende Kräfte auf die Windenergieanlage bei sich ändernden Windrichtungen und/oder Windgeschwindigkeiten reduziert oder innerhalb bestimmter Grenzen gehalten werden.

Um eine solche Einstellmöglichkeit der Windenergieanlage mit einer Steuerung auch in einem Trennzustand, bei dem die Windenergieanlage nicht mit einem Netz verbunden ist, zu gewährleisten, sind verschiedene Lösungen bekannt. Insbesondere bei einem Trennzustand, der beispielsweise dadurch entsteht, dass eine Windenergieanlage nach dem Errichten noch nicht mit dem Netz verbunden ist, werden beispielsweise häufig Generatoren mit einem Verbrennungsmotor eingesetzt. Ein solcher Generator wird etwa im Bereich der Windenergieanlage aufgestellt und die Windenergieanlage kontinuierlich oder bei Bedarf von Energie für eine Einstellung mit Energie versorgt. Zudem ist es bekannt, Akkumulatoren vorzusehen, die bei Bedarf die Windenergieanlage mit Energie versorgen, um beispielsweise Trennzustände, die durch einen kurzfristigen Netzausfall entstehen, zu überbrücken.

Die bekannten Lösungen sehen üblicherweise eine Einspeisung von Energie in die Windenergieanlage im Bereich des Netzanschlusses vor, so dass eine Energieversorgungseinheit einer Windenergieanlage lediglich einen Umschalter vorsehen muss, der Komponenten der Windenergieanlage bei einer ersten Schalterstellung mit Energie aus dem Netz und bei einer zweiten Schalterstellung mit Energie aus einem Energiespeicher oder Generator bereitstellt.

Eine Bereitstellung einer Energieversorgung einer Windenergieanlage im Trennzustand ist somit möglich und auch für Windenergieanlagen nachrüstbar, die bislang ohne Netzanschluss energieversorgungslos waren.

Der Energiebedarf einer Windenergieanlage in einem Trennzustand führt jedoch zu einer zeitlich begrenzten sicheren Betriebsdauer, insbesondere beim Einsatz von Energiespeichern. Ein länger andauernder Trennzustand ist daher nur mit Energiespeichern möglich, die eine sehr hohe Kapazität aufweisen.

In der prioritätsbegründenden deutschen Patentanmeldung hat das Deutsche Patent- und Markenamt das folgende Dokument recherchiert: KR 10-2020-0015699 A.

Aufgabe der vorliegenden Erfindung ist es daher, den Problemen des Standes der Technik zu begegnen. Insbesondere soll eine Möglichkeit gefunden werden, um einen Zeitraum, in dem ein sicherer Betrieb einer Windenergieanlage im Trennzustand aufrechterhalten werden kann, zu verlängern. Jedenfalls ist es Aufgabe der vorliegenden Erfindung eine Alternative zum aus dem Stand der Technik Bekannten zu finden.

Die Erfindung schlägt daher ein Windenergieanlagensystem nach Anspruch 1 vor.

Die Erfindung betrifft demnach ein Windenergieanlagensystem für eine Windenergieanlage mit einer Steuerung zum Steuerung der Windenergieanlage und einer Energieversorgungseinheit. Die Energieversorgungseinheit umfasst einen Energiespeicher. Ferner umfasst das Windenergieanlagensystem einen Netzanschluss zum Anschluss an ein Netz. Die Energieversorgungseinheit ist eingerichtet, einen Normalbetriebsmodus der Windenergieanlage und einen Trennzustand der Windenergieanlage zu erkennen. Im Normalbetriebsmodus ist die Windenergieanlage mit dem Netz verbunden. Im Trennzustand ist die Windenergieanlage vom Netz getrennt. Im Normalbetriebsmodus ist demnach über den Netzanschluss Energie aus dem Netz entnehmbar. Der Trennzustand umfasst hier eine Trennung der Windenergieanlage vom Netz, wobei eine solche Trennung auch umfasst, dass keine Energie von der Windenergieanlage aus dem Netz entnommen werden kann, also eine physikalische Verbindung weiterhin besteht.

Außerdem ist die Steuerung mit einem Windsensor zum Erfassen von Windparametern verbunden. Die Steuerung umfasst eine Azimutsteuerung zum Einstellen eines Azimutwinkels der Windenergieanlage in Abhängigkeit von den Windparametern. Windparameter umfassen beispielsweise mit dem Windsensor erfasste Windgeschwindigkeiten des Windes oder aus dem zeitlichen Verlauf der Windgeschwindigkeit abgeleitete Mittelwerte der Windgeschwindigkeit, wie beispielsweise einen 10-Minuten-Mittelwert. Eine Windgeschwindigkeit wird beispielsweise in km/h oder m/s angegeben. Außerdem umfassen die Windparameter beispielsweise eine Windrichtung des Windes, die beispielsweise als Winkel in Grad angegeben wird. Ein Winkel von 0° entspricht etwa einer Windrichtung, bei der der Wind aus nördlicher Himmelsrichtung auf die Windenergieanlage trifft. Ein Winkel von 90° entspricht einer Windrichtung, bei der der Wind aus östlicher Himmelsrichtung auf die Windenergieanlage trifft.

Außerdem umfasst die Energieversorgungseinheit eine Überwachungsvorrichtung. Die Überwachungsvorrichtung wird im Trennzustand mit Energie aus dem Energiespeicher versorgt. Die Überwachungsvorrichtung ist mit dem Windsensor, mit dem die Steuerung verbunden ist, und/oder einem weiteren Windsensor zum Erfassen von Windparametern verbunden und eingerichtet auch im Trennzustand Windparameter zu erfassen. Die Energieversorgungseinheit ist außerdem eingerichtet, um im Trennzustand in Abhängigkeit von mit der Überwachungsvorrichtung erfassten Windparametern die Steuerung energieversorgungslos zu schalten oder mit Energie aus dem Energiespeicher zu versorgen.

Vorzugweise ist die Energieversorgungseinheit demnach eingerichtet, in dem Normalbetriebsmodus die Steuerung mit Energie aus dem Netz zu versorgen. Erkennt die Energieversorgungseinheit jedoch einen Trennzustand, so wird im Trennzustand zwar die Überwachungsvorrichtung mit Energie aus dem Energiespeicher versorgt aber die Steuerung energieversorgungslos geschaltet. Bei Bedarf kann jedoch auch die Steuerung mit Energie aus dem Energiespeicher versorgt werden. Hierzu werden Windparamater mit dem Windsensor und der Überwachungsvorrichtung überwacht und in Abhängigkeit von diesen Windparametern mit der Energieversorgungseinheit entschieden, ob die Steuerung energieversorgungslos geschaltet wird oder mit Energie aus dem Energiespeicher versorgt wird.

Ein sicherer Betrieb der Windenergieanlage wird somit sichergestellt, auch wenn die Windenergieanlage nicht mit dem Netz verbunden ist. Erfindungsgemäß wird nämlich die Steuerung einer Windenergieanlage, die für übliche Steueraufgaben, insbesondere zum Erhalten eines sicheren Zustands der Windenergieanlage auch im Trennzustand, dient, aus dem Energiespeicher mit Energie versorgt. Diese Versorgung erfolgt jedoch nur bei Bedarf. Ist keine Verstellung der Windenergieanlage nötig, um einen sicheren Zustand zu gewährleisten, so wird die Energieversorgung der Steuerung unterbrochen. Überwachungsaufgaben der Steuerung, um beispielsweise Belastungssituationen zu erkennen, werden dann von der Überwachungsvorrichtung übernommen.

Durch Abschalten der Steuerung ist Energie einsparbar, so dass eine Windenergieanlage im Trennzustand gegenüber einer aus dem Stand der Technik bekannten Windenergieanlage bei gleicher Kapazität eines Energiespeichers mit dem erfindungsgemäßen Windenergieanlagensystem einen längeren Zeitraum eines sicheren Zustands ermöglicht. Der Erfindung liegt die Erkenntnis zugrunde, dass eine isolierte Überwachungsvorrichtung mit gegenüber einer Steuerung eingeschränktem Funktionsumfang weniger Energie benötigt.

Gemäß einer ersten Ausführungsform ist die Energieversorgungseinheit eingerichtet, die Steuerung im Trennzustand energieversorgungslos zu halten, wenn ein eine Windgeschwindigkeit repräsentierender Windparameter unterhalb mindestens eines vordefinierten Schwellenwerts liegt oder ein eine Windrichtung repräsentierender Windparameter innerhalb eines vordefinierten Maximalwindrichtungsbereichs liegt. Außerdem ist die Energieversorgungseinheit eingerichtet, eine Energieversorgung der Steuerung einzuschalten, wenn der die Windgeschwindigkeit repräsentierende Windparameter oberhalb des Schwellenwerts liegt und der die Windrichtung repräsentierende Windparameter außerhalb des vordefinierten Maximalwindrichtungsbereichs liegt.

Die Steuerung wird demnach im Trennzustand solange energieversorgungslos gehalten, also in einem Zustand gehalten, in dem die Steuerung nicht mit Energie versorgt wird, solange sich eine Windgeschwindigkeit oder eine Windrichtung des Windes innerhalb vordefinierter Grenzwerte bewegen. Bevorzugt wird die Steuerung energieversorgungslos gehalten, solange die Windgeschwindigkeit, repräsentiert durch einen die Windgeschwindigkeit repräsentierenden Windparameter, unterhalb des vordefinierten Schwellenwerts verbleibt, ohne dass eine Windrichtungsänderung einen Einfluss hat. Auch, wenn der die Windrichtung repräsentierende Windparameter außerhalb des vordefinierten Maximalwindrichtungsbereichs liegt, aber die Windgeschwindigkeit unterhalb des Schwellenwerts bleibt, bleibt demnach die Steuerung also vorzugsweise energieversorgungslos. Entsprechend verbleibt die Steuerung energieversorgungslos, wenn nur die Windgeschwindigkeit oberhalb des Schwellenwerts tritt, aber die Windrichtung im Maximalwindrichtungsbereich liegt.

Bevorzugt wird die Energieversorgung der Steuerung also erst dann eingeschaltet, wenn der die Windgeschwindigkeit repräsentierende Windparameter oberhalb des Schwellenwerts und der die Windrichtung repräsentierende Windparameter außerhalb des vordefinierten Maximalwindrichtungsbereichs liegen. Eine Windrichtungsänderung führt demnach nicht automatisch zum Versorgen der Steuerung mit Energie, solange die Windgeschwindigkeit unterhalb des Schwellenwerts bleibt oder umgekehrt.

Hierbei liegt der Ausführungsform die Erkenntnis zugrunde, dass im Trennzustand die Windenergieanlage ohnehin in einen Zustand gebracht wird, in dem die Rotorblätter derart ausgerichtet sind, dass ein frontal auf den Rotor auftretender Wind eine möglichst geringe Kraft auf den Rotor ausübt. Demnach wird eine Verstellung der Rotorblätter um ihre Längsachse nicht nötig, wenn die Windgeschwindigkeit variiert. Ändert sich jedoch die Windrichtung, so ist eine Nachführung der Gondel, also ein Neueinstellen des Azimutwinkels, im Fall höherer Windgeschwindigkeiten nötig. Für diesen Fall wird die Steuerung mit Energie versorgt, um den Azimutwinkel mit der Azimutsteuerung anzupassen. Hier wurde erkannt, dass der Azimutwinkel nur dann angepasst werden muss, wenn die Windrichtungsänderung bei hohen Windgeschwindigkeiten auftritt. Einstellvorgänge und somit aufzuwendende Energie im Trennzustand werden somit weiter reduziert.

Gemäß einer weiteren Ausführungsform ist die Energieversorgungseinheit eingerichtet, im Trennzustand eine mit Energie aus dem Energiespeicher versorgte Steuerung energieversorgungslos zu schalten, wenn der die Windrichtung repräsentierende Windparameter innerhalb eines Minimalwindrichtungsbereichs liegt oder wenn der die Windgeschwindigkeit repräsentierende Windparameter unterhalb des mindestens einen vordefinierten Schwellenwerts oder eines vordefinierten weiteren Schwellenwerts liegt. Fällt demnach die Windgeschwindigkeit unter den vordefinierten Schwellenwert oder den weiteren Schwellenwert, so wird die Energieversorgung der Steuerung unterbrochen. Liegt die Windrichtung innerhalb des vordefinierten Minimalwindrichtungsbereichs, wird ebenfalls eine Energieversorgung der Steuerung abgeschaltet.

Gemäß einer weiteren Ausführungsform ist die Überwachungsvorrichtung eingerichtet, den Maximalwindrichtungsbereich und/oder den Minimalwindrichtungsbereich in Abhängigkeit von einer aktuellen Azimutausrichtung der Windenergieanlage anzupassen. In Abhängigkeit von einer aktuellen Azimutausrichtung wird demnach mit der Überwachungsvorrichtung der Minimalwindrichtungsbereich oder der Maximalwindrichtungsbereich festgelegt.

Beispielsweise ist der Minimalwindrichtungsbereich immer als der Winkelbereich festgelegt, der zwischen zwei Winkeln liegt, die einerseits dem aktuellen Winkelbereich zuzüglich einem Wert und andererseits dem aktuellen Winkelbereich abzüglich des Werts entsprechen. Analog ist auch der Maximalwindrichtungsbereich festgelegt, wobei der Wert für den Maximalwindrichtungsbereich sich vom Wert zur Festlegung für den Minimalwindrichtungsbereichs unterscheiden kann. Geht man beispielsweise von einer Windrichtung von 90° aus, wobei 0° und 360° einer Windrichtung aus Norden entsprechen würde, so entspricht der Maximalwindrichtungsbereich beispielsweise Windrichtungen, die mit einem Winkel zwischen 80° und 100° auf die Windenergieanlage treffen. Der Minimalwindrichtungsbereich umfasst demgegenüber beispielsweise Windrichtungen mit einem Winkel von 85° bis 95°.

Gemäß einer weiteren Ausführungsform umfasst der Maximalwindrichtungsbereich einen größeren Winkelbereich als der Minimalwindrichtungsbereich. Der Maximalwindrichtungsbereich entspricht vorzugsweise einem Winkelbereich, der zwischen -5° oder weniger, vorzugsweise -8° oder weniger, von dem aktuellen Azimutwinkel und +5° oder mehr, vorzugsweise +8° oder mehr, zum aktuellen Azimutwinkel liegt. Entspricht der aktuelle Azimutwinkel demnach beispielsweise einem 90°-Winkel, so entspricht der Maximalwindrichtungsbereich einem Bereich von beispielsweise 85° bis 95° oder vorzugsweise 82° bis 98°. Der Minimalwindrichtungsbereich entspricht ferner einem Winkelbereich zwischen einem Winkel, der -5° oder mehr von dem aktuellen Azimutwinkel entspricht, und einem Winkel, der +5° oder weniger zum Winkel des aktuellen Azimutwinkels entspricht.

Das Bereitstellen zweiter unterschiedlicher Windrichtungsbereiche, nämlich eines Maximalwindrichtungsbereichs und eines Minimalwindrichtungsbereichs, wobei der Minimalwindrichtungsbereich kleiner als der Maximalwindrichtungsbereich ist, dient dazu, ein ständiges Hin- und Herschalten zwischen einer Energieversorgung und einer Energieversorgungslosschaltung der Steuerung zu vermeiden, wenn sich die Windrichtung im Randbereich des Windrichtungsbereichs ändert. Vorzugsweise wird so im Fall, dass die Energieversorgungseinheit erkennt, dass die Windgeschwindigkeit über dem Schwellenwert und die Windrichtung außerhalb des Maximalwindrichtungsbereichs liegt und die Steuerung im Trennzustand mit Energie versorgt, um eine Azimutausrichtung anzupassen. Die Steuerung wird erst wieder energieversorgungslos geschaltet, wenn die aktuelle Windrichtung innerhalb des Minimalwindrichtungsbereichs liegt. Leichte Änderungen der Windrichtung sorgen demnach nicht dafür, dass der Maximalwindrichtungsbereich überschritten wird und somit eine erneute Energieversorgung der Steuerung nötig wird.

Gemäß einer weiteren Ausführungsform ist die Steuerung eingerichtet, im Trennzustand während einer Energieversorgung durch die Energieversorgungseinheit mit der Azimutsteuerung den Azimutwinkel der Windenergieanlage zu ändern.

Gemäß einer weiteren Ausführungsform umfasst das Windenergieanlagensystem einen Gleichspannungszwischenkreis. Die Energieversorgungseinheit ist im Trennzustand eingerichtet, den Energiespeicher mit dem Gleichspannungszwischenkreis in Abhängigkeit von den Windparametern zu trennen oder zu verbinden. Das Trennen und Verbinden erfolgt vorzugsweise mittels eines Gleichspannungswandlers. Ein Trennen dient, um den Gleichspannungszwischenkreis spannungslos zu schalten. Ein Verbinden dient dazu, den Gleichspannungszwischenkreis aus dem Energiespeicher mit Energie zu versorgen. Ferner ist die Energieversorgungseinheit eingerichtet, im Normalbetriebsmodus Energie zum Laden des Energiespeichers aus dem Gleichspannungszwischenkreis zu entnehmen. Ein Gleichspannungszwischenkreis dient somit zur Bereitstellung einer konstanten Spannung unabhängig vom Ladezustand des Energiespeichers aus dem Energiespeicher und zum Laden des Energiespeichers. Eine konstante Versorgungsspannung zum Versorgen von Komponenten der Windenergieanlage wird somit über den Gleichspannungszwischenkreis bereitgestellt.

Gemäß einer weiteren Ausführungsform ist die Energieversorgungseinheit im Normalbetriebsmodus eingerichtet, den Gleichspannungszwischenkreis über eine Gleichrichterschaltung und einen Transformator mit dem Netz zu verbinden. Demnach kann derselbe Gleichspannungszwischenkreis einerseits zum Bereitstellen von Energie aus dem Energiespeicher für die Komponenten und andererseits zum Bereitstellen von Energie aus dem Netz verwendet werden. Ein An- und Abkoppeln verschiedener Komponenten im Trennzustand an den Energiespeicher und im Normalbetriebsmodus an das Netz wird somit nicht benötigt und eine Verschaltung der Komponenten zur Energieversorgung ist somit mit einer geringen Komplexität möglich.

Gemäß einer weiteren Ausführungsform sind die Steuerung und mehrere Azimutantriebe zur Energieversorgung mit dem Gleichspannungszwischenkreis verbunden. Jeder Azimutantrieb umfasst mindestens einen Wechselrichter und mindestens einen Azimutmotor. Jeder Wechselrichter ist eingerichtet, den Azimutmotor mit Energie aus dem Gleichspannungszwischenkreis zu versorgen. Eine Steuerung der Wechselrichter erfolgt insbesondere mit der Azimutsteuerung der Steuerung. Durch Trennen des Energiespeichers vom Gleichspannungszwischenkreis in Abhängigkeit von den Windparametern im Trennzustand wird somit ein gleichzeitiges Energieversorgungslosschalten der Steuerung und der Azimutantriebe ermöglicht.

Außerdem betrifft die Erfindung eine Windenergieanlage mit einem Windenergieanlagensystem nach einer der vorgenannten Ausführungsformen.

Ferner betrifft die Erfindung ein Verfahren zum Betreiben einer Windenergieanlage mit einem Windenergieanlagensystem nach einer der vorgenannten Ausführungsformen.

Gemäß einer ersten Ausführungsform wird mit einer Energieversorgungseinheit eines Windenergieanlagensystems erkannt, ob sich die Windenergieanlage in einem Normalbetriebsmodus oder in einem Trennzustand befindet. Ferner werden mit einer Steuerung, die mit einem Windsensor verbunden ist, Windparameter in einem Normalbetriebsmodus erfasst. In Abhängigkeit von den Windparametern werden mit der Steuerung und einer Azimutsteuerung der Steuerung Azimutwinkel der Windenergieanlage in Abhängigkeit von den Windparametern im Normalbetriebsmodus eingestellt.

Ferner werden mit einer Überwachungsvorrichtung, die mit dem Windsensor oder einem weiteren Windsensor verbunden ist, Windparameter im Trennzustand der Windenergieanlage erfasst. Die Energieversorgungseinheit ist ferner eingerichtet in dem Trennzustand in Abhängigkeit von mit der Überwachungsvorrichtung erfassten Windparametern die Steuerung energieversorgungslos zu schalten oder mit Energie aus dem Energiespeicher zu versorgen. Die Überwachungsvorrichtung wird demgegenüber im Trennzustand ständig mit Energie aus dem Energiespeicher versorgt, also auch, wenn die Steuerung energieversorgungslos geschaltet wurde. Windparameter werden während einer energieversorgungslosen Steuerung, wenn diese also abgeschaltet ist, da sie keine Energie zum Betrieb hat, nur von der Überwachungsvorrichtung erfasst.

Gemäß einer Ausführungsform wird die Steuerung im Trennzustand energieversorgungslos gehalten, wenn ein eine Windgeschwindigkeit repräsentierender Windparameter unterhalb mindestens eines vordefinierten Schwellenwerts oder ein eine Windrichtung repräsentierender Windparameter innerhalb eines vordefinierten Maximalwindrichtungsbereichs liegt. Eine Energieversorgung der Steuerung wird eingeschaltet, wenn der die Windgeschwindigkeit repräsentierende Windparameter oberhalb des Schwellenwerts und der die Windrichtung repräsentierende Windparameter außerhalb des vordefinierten Maximalwindrichtungsbereichs liegt.

Gemäß einer weiteren Ausführungsform wird mit der Energieversorgungseinheit im Trennzustand eine mit der Energie aus dem Energiespeicher versorgte Steuerung energieversorgungslos geschaltet, wenn der die Windrichtung repräsentierende Windparameter innerhalb eines Minimalwindrichtungsbereichs und/oder wenn der die Windgeschwindigkeit repräsentierende Windparameter unterhalb des vordefinierten Schwellenwerts liegt.

Gemäß einer weiteren Ausführungsform wird mit der Überwachungsvorrichtung der Maximalwindrichtungsbereich und/oder der Minimalwindrichtungsbereich in Abhängigkeit von einer aktuellen Azimutausrichtung der Windenergieanlage angepasst, wobei vorzugsweise der Maximalwindrichtungsbereich einen größeren Winkelbereich als der Minimalwindrichtungsbereich aufweist.

Weitere Ausführungsformen ergeben sich anhand der in den Figuren näher erläuterten Ausführungsbeispiele. Hierbei zeigen:
- Fig. 1: eine Windenergieanlage,

- Fig. 2: ein Ausführungsbeispiel eines Windenergieanlagensystems,
- Fig. 3: eine Draufsicht auf eine Windenergieanlage in schematischer Darstellung und
- Fig. 4: ein Ausführungsbeispiel des Verfahrens.

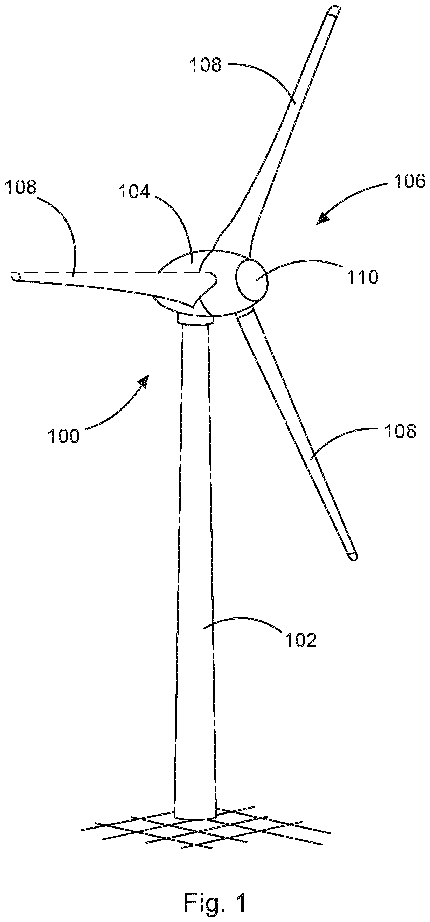

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

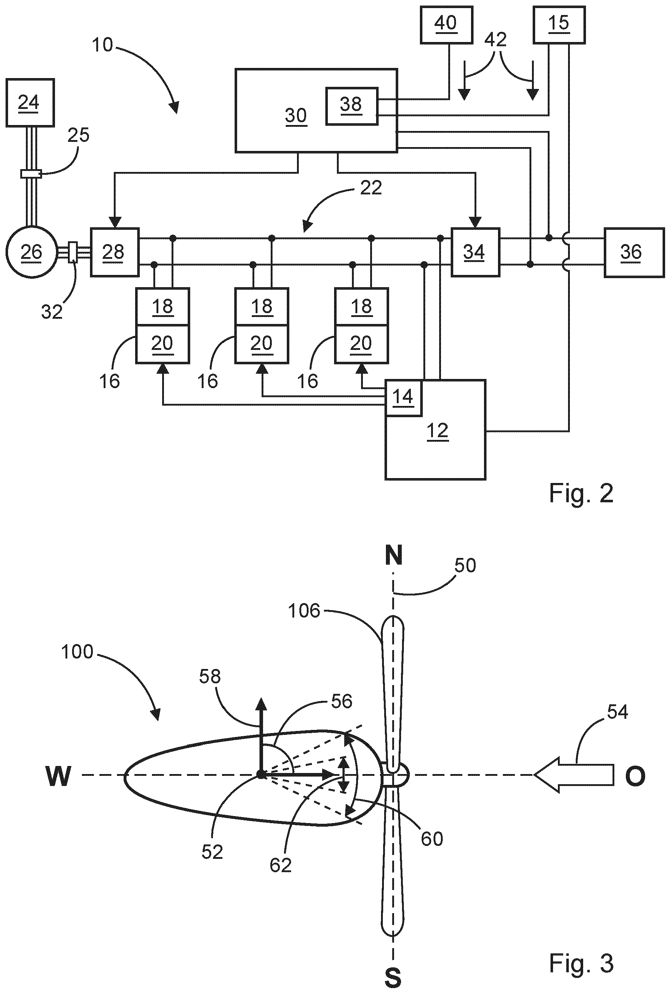

Fig. 2 zeigt ein Windenergieanlagensystem 10 gemäß einem Ausführungsbeispiel für eine Windenergieanlage 100. Das Windenergieanlagensystem 10 umfasst eine Steuerung 12, die eine Azimutsteuerung 14 umfasst, um mehrere Azimutantriebe 16 der Windenergieanlage 100 anzusteuern, um so einen Azimutwinkel der Windenergieanlage 100 zu verändern. Hierzu ist die Steuerung 12 mit einem Windsensor 15 verbunden.

Jeder der Azimutantriebe 16 umfasst jeweils mindestens einen Wechselrichter 18 und einen Azimutmotor 20, wobei die Wechselrichter 18 mit einem Gleichspannungszwischenkreis 22 verbunden sind, um Energie aus dem Gleichspannungszwischenkreis 22 für den zugeordneten Azimutmotor 20 bereitzustellen. Die Wechselrichter 18 werden hierbei durch die Azimutsteuerung 14 entsprechend gesteuert. Auch die Steuerung 12 ist mit dem Gleichspannungszwischenkreis 22 verbunden, um Energie zum Betreiben der Steuerung 12 aus dem Gleichspannungszwischenkreis 22 zu entnehmen.

Um Energie im Gleichspannungskreis 22 bereitzustellen, ist im Normalbetriebsmodus das Windenergieanlagensystem 10 mit einem Netz 24 über einen Netzanschluss 25 verbunden. Energie wird so mit einer Versorgungsspannung im Gleichspannungszwischenkreis 22 aus dem Netz 24 bereitstellt. Die Spannung wird hierzu mit einem Transformator 26 umgewandelt und die Energie über eine Gleichrichterschaltung 28 in den Gleichspannungszwischenkreis 22 eingespeist. Eine Energieversorgungseinheit 30 detektiert über eine Spannungsmesseinrichtung 32, ob über das Netz 24 eine Versorgungsspannung für den Gleichspannungszwischenkreis 22 bereitgestellt werden kann und steuert entsprechend die Gleichrichterschaltung 28. Im Fall, dass keine Spannung durch das Netz 24 bereitgestellt wird, wird dies mit der Spannungsmesseinrichtung 32 detektiert und ein Trennzustand erkannt. Im Trennzustand ist die Energieversorgungseinheit 30 eingerichtet, einen Gleichspannungswandler 34 derart anzusteuern, dass Energie aus einem Energiespeicher 36 in den Gleichspannungszwischenkreis 22 eingespeist wird.

Ferner umfasst das Windenergieanlagensystem 10 eine Überwachungsvorrichtung 38, die mit dem Windsensor 15 und einem weiteren Windsensor 40 verbunden ist, um Windparameter 42 zu empfangen. Die Überwachungsvorrichtung 38 ist hier als Bestandteil der Energieversorgungseinheit 30 dargestellt, so dass in Abhängigkeit von den Windparametern mit der Energieversorgungseinheit 30 entschieden werden kann, ob der Gleichspannungszwischenkreis 22 mit Energie aus dem Energiespeicher 36 versorgt wird oder energieversorgungslos geschaltet wird. Dies wird über den Gleichspannungswandler 34 umgesetzt. Die Energieversorgungseinheit 30 mit der Überwachungsvorrichtung 38 ist ständig mit dem Energiespeicher 36 verbunden, um auch im Fall, dass die Energieversorgungseinheit 30 den Gleichspannungszwischenkreis 22 spannungslos oder energieversorgungslos schaltet, weiterhin im Trennzustand Windparameter erfassen zu können.

Die Energieversorgungseinheit 30 ist somit eingerichtet, im Fall von Windparametern, die außerhalb vordefinierter Grenzen liegen, die Steuerung 12 sowie die Azimutantriebe 16 mit Energie zu versorgen, um einen Azimutwinkel zu verstellen und im Fall, dass die Windparameter 42 innerhalb vordefinierter Grenzen liegen, die Steuerung 12 sowie die Azimutantriebe 18 energieversorgungslos zu schalten. Hierzu sind in der Energieversorgungseinheit 30 und/oder der Überwachungsvorrichtung 38 verschiedene Bereiche und/oder Werte zur Festlegung der genannten Grenzen hinterlegt. Diese werden mit Hinblick auf Fig. 3 erläutert.

Entsprechend zeigt Fig. 3 eine schematische Draufsicht auf eine Windenergieanlage 100. Die Windenergieanlage 100 umfasst einen Rotor 106, der eine Rotorebene 50 bildet. Üblicherweise wird die Gondel 104 um einen Drehmittelpunkt 52 einer Windrichtung 54 nachgeführt. Dieses Nachführen entspricht dem Einstellen eines Azimutwinkels 56. Der Azimutwinkel 56 ist hier beispielsweise ausgehend von einer Nullstellung 58, die in nördliche Himmelsrichtung zeigt, um etwa 90° gedreht, so dass sich ein Azimutwinkel 56 von 90° ergibt. Ausgehend vom Drehmittelpunkt 52 zeigt die Rotorebene 50 somit in östliche Richtung.

Der Wind trifft ebenfalls aus östlicher Richtung auf den Rotor 106, so dass die Windrichtung 54 ebenfalls 90° bezogen auf die nördliche Himmelsrichtung beträgt.

Gemäß dem Verfahren wird nun ein Maximalwindrichtungsbereich 60 definiert, der zischen +8° und -8° zum aktuellen Azimutwinkel 56 beträgt. Ferner wird ein Minimalwindrichtungsbereich 62 definiert, der in einem Bereich zwischen +5° und -5° zum aktuellen Azimutwinkel 56 festgelegt wird. Ändert sich nun die Windrichtung 54 derart, dass diese außerhalb des Maximalwindrichtungsbereichs 60 tritt, so wird dies über die Überwachungsvorrichtung 38 und/oder die Energieversorgungseinheit 30 detektiert und die Steuerung 12 sowie die Azimutantriebe 16 über den Gleichspannungszwischenkreis 22 mit Energie versorgt, um die Windenergieanlage 100 nachzuführen. Eine Nachführung erfolgt solange, bis die Windrichtung 54 innerhalb des in Abhängigkeit vom aktuellen Azimutwinkel 56 angepassten Minimalwindrichtungsbereich 62 liegt. Daraufhin werden die Steuerung 12 sowie die Azimutantriebe 16 energieversorgungsspannungslos geschaltet.

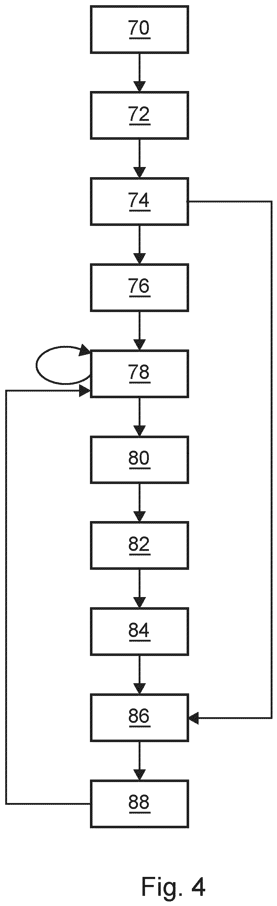

Fig. 4 zeigt die Schritte eines Ausführungsbeispiels des Verfahrens. In einem Schritt 70 wird über die Spannungsmesseinrichtung 32 ein Spannungswegfall des Netzes 24 erkannt. Die Energieversorgungseinheit 30 erkennt somit einen Trennzustand im Schritt 72. Im Schritt 74 wird überprüft, ob die aktuelle Windrichtung 54 innerhalb des Minimalwindrichtungsbereichs 62 liegt, was üblicherweise der Fall ist, da im Normalbetriebsmodus die Windenergieanlage 100 kontinuierlich der Windrichtung 54 bezüglich ihres Azimutwinkels 56 nachgeführt wird.

Liegt die aktuelle Windrichtung 54 innerhalb des Minimalwindrichtungsbereichs 62, wird im Schritt 76 der Gleichspannungszwischenkreis 22 energieversorgungslos geschaltet oder gehalten. Im Schritt 78 erfolgt dann eine Überwachung der Windparameter 42 mit der Überwachungsvorrichtung 38. Wird eine Änderung der Windparameter 42 im Schritt 80 erkannt, die anzeigt, dass die Windrichtung 54 und die Windgeschwindigkeit außerhalb vordefinierter Grenzen, also die Windgeschwindigkeit oberhalb des Schwellenwerts und die Windrichtung 54 außerhalb des Maximalwindrichtungsbereichs, liegen, wird im Schritt 82 mit dem Gleichspannungswandler 34 Energie aus dem Energiespeicher 36 in den Gleichspannungszwischenkreis 22 eingespeist, um die Steuerung 12 und die Azimutantriebe 16 im Schritt 84 mit Energie zu versorgen. Im Schritt 86 wird dann der Azimutwinkel 56 der Windenergieanlage 100 angepasst. Der Schritt 86 wird auch nach Schritt 74, wenn die aktuelle Windrichtung 54 außerhalb des Minimalwindrichtungsbereichs 62 oder des Maximalwindrichtungsbereichs 60 liegt und die Windgeschwindigkeit oberhalb vom vordefinierten Schwellenwert liegt, ausgeführt.

Liegen die Windparameter 42 dann wieder in den vordefinierten Grenzen, werden mit der Energieversorgungseinheit 30 im Schritt 88 die Steuerung 12 sowie die Azimutantriebe 16 energieversorgungslos geschaltet. Darauf wird wieder Schritt 78 ausgeführt. Das Verfahren wird solange ausgeführt, bis mit der Spannungsmesseinrichtung 32 festgestellt wird, dass wieder eine Netzspannung vorhanden ist, so dass wieder in den Normalbetriebsmodus zurückgeschaltet wird und der Gleichspannungszwischenkreis 22 ständig mit Energie aus dem Netz 24 versorgt wird.

### Bezugszeichen

- 10: Windenergieanlagensystem
- 12: Steuerung
- 14: Azimutsteuerung
- 15: Windsensor
- 16: Azimutantriebe
- 18: Wechselrichter
- 20: Azimutmotor
- 22: Gleichspannungszwischenkreis
- 24: Netz
- 25: Netzanschluss
- 26: Transformator
- 28: Gleichrichterschaltung
- 30: Energieversorgungseinheit
- 32: Spannungsmesseinrichtung
- 34: Gleichspannungswandler
- 36: Energiespeicher
- 38: Überwachungsvorrichtung
- 40: weiterer Windsensor
- 42: Windparameter
- 50: Rotorebene
- 52: Drehmittelpunkt
- 54: Windrichtung
- 56: Azimutwinkel
- 58: Nullstellung
- 60: Maximalwindrichtungsbereich
- 62: Minimalwindrichtungsbereich
- 70: Erkennen Spannungswegfall
- 72: Erkennen Trennzustand
- 74: Überprüfen, ob aktuelle Windrichtung innerhalb des Minimalwindrichtungsbereichs liegt
- 76: Energieversorgungslosschalten oder -halten des Gleichspannungszwischenkreises
- 78: Überwachen der Windparameter
- 80: Erkennen ein Ändern der Windparameter
- 82: Einspeisen Energie
- 84: Versorgen von Steuerung und Azimutantriebe mit Energie
- 86: Anpassen Azimutwinkel
- 88: Energieversorgungslosschalten der Steuerung und Azimutantriebe
- 100: Windenergieanlage
- 104: Gondel
- 106: Rotor
- 100: Windenergieanlage
- 102: Turm
- 104: Gondel
- 106: aerodynamischer Rotor
- 108: Rotorblätter
- 110: Spinner

## Patentansprüche

1. Windenergieanlagensystem (10) für eine Windenergieanlage (100) mit einer Steuerung (12) zum Steuern der Windenergieanlage (100) und einer Energieversorgungseinheit (30) mit einem Energiespeicher (36) sowie einem Netzanschluss (25) zum Anschluss an ein Netz (24),
wobei die Energieversorgungseinheit (30) eingerichtet ist, einen Normalbetriebsmodus der Windenergieanlage (100), in dem die Windenergieanlage (100) mit dem Netz (24) verbunden ist, und einen Trennzustand der Windenergieanlage (100), in dem die Windenergieanlage (100) vom Netz (24) getrennt ist, zu erkennen,
und wobei die Steuerung (12) mit einem Windsensor (15) zum Erfassen mindestens eines Windparameters (42) verbunden ist und eine Azimutsteuerung (14) zum Einstellen eines Azimutwinkels (56) der Windenergieanlage (100) in Abhängigkeit von dem Windparameter (42) umfasst,
wobei die Energieversorgungseinheit (30) ferner eine Überwachungsvorrichtung (38) aufweist, die im Trennzustand mit Energie aus dem Energiespeicher (36) versorgt wird und mit dem Windsensor (15) oder einem weiteren Windsensor (40) zum Erfassen von Windparametern (42) im Trennzustand verbunden ist,
und die Energieversorgungseinheit (30) eingerichtet ist, in dem Trennzustand in Abhängigkeit von dem mit der Überwachungsvorrichtung (38) erfassten Windparameter (42) die Steuerung (12) energieversorgungslos zu schalten oder mit Energie aus dem Energiespeicher (36) zu versorgen.

2. Windenergieanlagensystem (10) nach Anspruch 1, wobei die Energieversorgungseinheit (30) eingerichtet ist, die Steuerung (12) im Trennzustand energieversorgungslos zu halten, wenn ein eine Windgeschwindigkeit repräsentierender Windparameter (42) unterhalb mindestens eines vordefinierten Schwellenwerts liegt oder ein eine Windrichtung (54) repräsentierender Windparameter (42) innerhalb eines vordefinierten Maximalwindrichtungsbereichs (60) liegt, und eine Energieversorgung einzuschalten, wenn der die Windgeschwindigkeit repräsentierende Windparameter (42) oberhalb des Schwellenwerts und der die Windrichtung (54) repräsentierende Windparameter außerhalb des vordefinierten Maximalwindrichtungsbereichs (60) liegt.

3. Windenergieanlagensystem (10) nach Anspruch 1 oder 2, wobei die Energieversorgungseinheit (30) eingerichtet ist, im Trennzustand eine mit Energie aus dem Energiespeicher (36) versorgte Steuerung (12) energieversorgungslos zu schalten, wenn der die Windrichtung (54) repräsentierende Windparameter (42) innerhalb eines Minimalwindrichtungsbereichs (62) liegt und/oder wenn der die Windgeschwindigkeit repräsentierende Windparameter (42) unterhalb des mindestens einen vordefinierten Schwellenwerts oder eines vordefinierten weiteren Schwellenwerts liegt.

4. Windenergieanlagensystem (10) nach einem der vorhergehenden Ansprüche, wobei die Überwachungsvorrichtung (38) eingerichtet ist, den Maximalwindrichtungsbereich (60) und/oder den Minimalwindrichtungsbereich (62) in Abhängigkeit von einem aktuellen Azimutwinkel (56) der Windenergieanlage (100) anzupassen.

5. Windenergieanlagensystem (10) nach einem der vorhergehenden Ansprüche, wobei der Maximalwindrichtungsbereich (60) einen größeren Winkelbereich als der Minimalwindrichtungsbereich (62) aufweist, wobei der Maximalwindrichtungsbereich (60) vorzugsweise einem Winkelbereich entspricht, der zwischen -8° oder weniger vom aktuellen Azimutwinkel (56) bis hin zu 8° oder mehr zum aktuellen Azimutwinkel (56) liegt und der Minimalwindrichtungsbereich (62) einem Winkelbereich entspricht, der zwischen einem Winkel von -5° oder mehr vom aktuellen Azimutwinkel (56) und einem Winkel von 5° oder weniger zum aktuellen Azimutwinkel (56) liegt.

6. Windenergieanlagensystem (10) nach einem der vorhergehenden Ansprüche, wobei die Steuerung (12) eingerichtet ist, im Trennzustand während einer Energieversorgung durch die Energieversorgungseinheit (30) mit der Azimutsteuerung (14) und mit Azimutantrieben (16) den Azimutwinkel (56) der Windenergieanlage (100) zu ändern.

7. Windenergieanlagensystem (10) nach einem der vorhergehenden Ansprüche, wobei das Windenergieanlagensystem (10) einen Gleichspannungszwischenkreis (22) aufweist und die Energieversorgungseinheit (30) eingerichtet ist, im Trennzustand den Energiespeicher (36) mit einem Gleichspannungszwischenkreis (22), vorzugsweise über einen Gleichspannungswandler (34), in Abhängigkeit von den Windparametern (42) zu trennen, um den Gleichspannungszwischenkreis (22) spannungslos zu schalten, oder zu verbinden, um Energie in den Gleichspannungszwischenkreis (22) aus dem Energiespeicher (36) einzuspeisen.

8. Windenergieanlagensystem (10) nach einem der vorhergehenden Ansprüche, wobei das Windenergieanlagensystem (10) im Normalbetriebsmodus eingerichtet ist, den Gleichspannungszwischenkreis (22) über eine Gleichrichterschaltung (28) und einen Transformator (26) mit dem Netz (24) zu verbinden und Energie zum Laden des Energiespeichers (36) aus dem Gleichspannungszwischenkreis (22) zu entnehmen.

9. Windenergieanlagensystem (10) nach einem der vorhergehenden Ansprüche, wobei die Steuerung (12) und mehrere Azimutantriebe (16) zur Energieversorgung mit dem Gleichspannungszwischenkreis (22) verbunden sind, wobei jeder Azimutantrieb (16) mindestens einen Wechselrichter (18) und mindestens einen Azimutmotor (20) aufweist, wobei der Wechselrichter (18) jedes Azimutantriebs (16) eingerichtet ist, den Azimutmotor (20) mit Energie aus dem Gleichspannungszwischenkreis (22) zu versorgen.

10. Windenergieanlage (100) mit einem Windenergieanlagensystem (10) nach einem der vorhergehenden Ansprüche.

11. Verfahren zum Betreiben einer Windenergieanlage (100), insbesondere nach Anspruch 10, mit einem Windenergieanlagensystem (12) nach einem der Ansprüche 1 bis 9.

12. Verfahren nach Anspruch 11, wobei mit einer Steuerung (12) der Windenergieanlage (100) Windparameter (42) von einem Windsensor (15) empfangen werden und ein Azimutwinkel (56) der Windenergieanlage (100) in Abhängigkeit von den Windparametern (42) eingestellt wird, wobei mit einer Energieversorgungseinheit (30) ein Trennzustand der Windenergieanlage (100) erkannt wird und im Trennzustand eine Überwachungsvorrichtung (38) mit Energie aus einem Energiespeicher (36) versorgt wird, um Windparameter (42) von einem mit der Überwachungsvorrichtung (38) verbundenen Windsensor (40) zu erfassen, wobei mit der Energieversorgungseinheit (30) in Abhängigkeit von den erfassten Windparametern (42) im Trennzustand die Steuerung (12) mit Energie aus dem Energiespeicher (36) versorgt oder energieversorgungslos geschaltet wird.

13. Verfahren nach Anspruch 11 oder 12, wobei die Steuerung (12) im Trennzustand energieversorgungslos gehalten wird, wenn ein eine Windgeschwindigkeit repräsentierender Windparameter (42) unterhalb mindestens eines vordefinierten Schwellenwerts liegt und/oder ein eine Windrichtung (54) repräsentierender Windparameter (42) innerhalb eines vordefinierten Maximalwindrichtungsbereichs (60) liegt und die Energieversorgung der Steuerung (12) eingeschaltet wird, wenn der die Windgeschwindigkeit repräsentierende Windparameter (42) oberhalb des Schwellenwerts liegt und/oder der die Windrichtung (54) repräsentierende Windparameter (42) außerhalb des vordefinierten Maximalwindrichtungsbereichs (60) liegt.

14. Verfahren nach einem der Ansprüche 11 bis 13, wobei im Trennzustand eine mit Energie aus dem Energiespeicher (36) versorgte Steuerung (12) energieversorgungslos geschaltet wird, wenn der die Windrichtung (54) repräsentierende Windparameter (42) innerhalb eines Minimalwindrichtungsbereichs (62) liegt und/oder wenn der die Windgeschwindigkeit repräsentierende Windparameter (42) unterhalb mindestens eines vordefinierten Schwellenwerts liegt.

15. Verfahren nach einem der Ansprüche 11 bis 14, wobei der Maximalwindrichtungsbereich (60) und/oder der Minimalwindrichtungsbereich (62) in Abhängigkeit von einem Azimutwinkel (56) der Windenergieanlage (100) angepasst wird.
